(19) Europäisches Patentamt
European Patent Office
Office européen des brevets

(11) **EP 3 942 199 B1**

(12) **FASCICULE DE BREVET EUROPEEN**

(45) Date de publication et mention
de la délivrance du brevet:
**08.03.2023 Bulletin 2023/10**

(21) Numéro de dépôt: **19849036.9**

(22) Date de dépôt: **30.12.2019**

(51) Classification Internationale des Brevets (IPC):
**F16H 29/20** (2006.01)          **F16H 19/04** (2006.01)
**F16H 47/02** (2006.01)

(52) Classification Coopérative des Brevets (CPC):
**F16H 29/20; F16H 19/043; F16H 47/02**

(86) Numéro de dépôt international:
**PCT/FR2019/053318**

(87) Numéro de publication internationale:
**WO 2020/188156 (24.09.2020 Gazette 2020/39)**

(54) **ENSEMBLE HYDROMÉCANIQUE D'AMPLIFICATION DE PUISSANCE**

**HYDROMECHANISCHE LEISTUNGSVERSTÄRKERANORDNUNG**

**HYDROMECHANICAL POWER AMPLIFIER ASSEMBLY**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2019 FR 1902938**

(43) Date de publication de la demande:
**26.01.2022 Bulletin 2022/04**

(73) Titulaire: **Monai, Lanfranco**
**64350 Lembeye (FR)**

(72) Inventeur: **MONAI, Lanfranco**
**64350 Lembeye (FR)**

(74) Mandataire: **Ipside**
**7-9 Allées Haussmann**
**33300 Bordeaux Cedex (FR)**

(56) Documents cités:
**US-A- 482 732          US-A1- 2012 025 543**
**US-A1- 2017 101 977**

## Description

## DOMAINE TECHNIQUE

La présente invention appartient au domaine des dispositifs à la fois mécaniques et hydrauliques, notamment des systèmes d'amplification de la puissance mécanique, et concerne plus particulièrement un ensemble hydromécanique d'amplification de puissance, par multiplication de la puissance et/ou du couple.

## ÉTAT DE L'ART

Dans certains systèmes électromécaniques ou hydromécaniques, la puissance utile disponible en sortie d'actionneur ne permet pas d'obtenir la vitesse de rotation et/ou le couple nécessaires à l'entraînement d'organes mobiles en sortie de charge pour un fonctionnement nominal. Cette situation peut être rencontrée dans des systèmes comportant un moteur électrique de faible puissance en entrée et un alternateur en sortie présentant un rotor de grande inertie par exemple.

Pour remédier à ce problème de transmission du mouvement, il est nécessaire d'augmenter la vitesse de rotation de l'arbre couplé au dispositif de sortie afin de pouvoir entrainer de façon nominale les organes mobiles de la charge, qui peut par exemple être un rotor de générateur électrique.

US2012/025543A décrit un ensemble amplificateur de puissance mécanique comportant en entrée une pompe, un vérin, un système pignon crémaillère couplé au vérin, un étage de réduction couplé audit système, et un alternateur en sortie, le système pignon crémaillère comportant une première crémaillère solidaire de la tige du vérin, une deuxième crémaillère solidaire de la tige du vérin, un premier pignon coopérant avec ladite première crémaillère, un deuxième pignon coopérant avec ladite deuxième crémaillère, et un arbre de transmission couplé à chacun desdits pignons selon un seul sens de rotation.

## PRÉSENTATION DE L'INVENTION

La présente invention a pour but principal de pallier les limitations de l'art antérieur en proposant un ensemble hydromécanique amplifiant la puissance mécanique entre une entrée de type moteur et une charge de type alternateur.

À cet effet, la présente invention concerne un ensemble amplificateur de puissance mécanique comportant un moteur en entrée, une pompe actionnée par le moteur, un distributeur alimenté par la pompe, un premier vérin, un deuxième vérin, les vérins étant communicants entre eux et raccordés au distributeur, un système pignon crémaillère, un étage de réduction, et un alternateur en sortie.

Selon un mode de réalisation particulièrement avantageux, le système pignon crémaillère comporte une première crémaillère solidaire de la tige du premier vérin, une deuxième crémaillère solidaire de la tige du deuxième vérin, un premier pignon coopérant avec ladite première crémaillère, un deuxième pignon coopérant avec ladite deuxième crémaillère, et un arbre de transmission, couplé à chacun desdits pignons selon un seul sens de rotation, l'autre sens de rotation étant en roue libre. Ainsi, le mouvement alterné des vérins, dans deux sens opposés, produit une rotation de l'arbre de transmission toujours selon le même sens.

Le premier pignon et le deuxième pignon engrènent, respectivement, sur la première crémaillère et la deuxième crémaillère, et impriment leur mouvement de rotation à l'arbre de transmission suivant un seul sens de rotation qui correspond aux sorties des tiges des deux vérins.

Avantageusement, le moteur est un moteur électrique à courant alternatif, tel qu'un moteur asynchrone monophasé.

Selon un mode de réalisation alternatif, le moteur est un moteur hydraulique.

De façon avantageuse, la pompe est une pompe hydraulique à engrenages.

Selon un mode de réalisation particulier, le distributeur comprend quatre orifices et trois positions, ou bien, quatre orifices et trois positions, et est commandé électriquement.

Avantageusement, les vérins sont des vérins hydrauliques double effet raccordés entre eux au moyen d'un raccord de type flexible ou tuyau rigide.

Plus particulièrement, l'étage de réduction est un engrenage constitué de quatre roues dentées opérant une multiplication de vitesse de rotation.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif des modes de réalisations d'un ensemble hydromécanique conforme aux principes de l'invention.

## BRÈVE DESCRIPTION DES FIGURES

Les différentes figures ainsi que les éléments d'une même figure ne sont pas nécessairement à la même échelle. Sur l'ensemble des figures, les éléments identiques portent la même référence numérique.

Il est ainsi illustré en :

- Figure 1 : une vue schématique en circuit d'un ensemble d'amplification selon l'invention ;
- Figure 2 : une autre vue schématique de l'ensemble d'amplification avec quelques paramètres physiques pertinents.

## DESCRIPTION DÉTAILLÉE DE MODES DE RÉALISATION

La terminologie employée dans la présente description ne doit en aucun cas être interprétée de manière limitative ou restrictive. Elle est simplement employée en conjonction avec une description détaillée de certains modes de réalisation de l'invention.

Dans le mode de réalisation décrit ci-après, on fait référence à un ensemble mécanique d'amplification de puissance destiné principalement à des installations industrielles nécessitant une grande puissance en sortie. Cet exemple, non limitatif, est donné pour une meilleure compréhension de l'invention et n'exclut pas l'application de l'invention à d'autres systèmes faisant appel à une transmission mécanique tels que des véhicules motorisés de type machine agricole ou autre.

Dans la suite de la description l'expression « ensemble amplificateur » désigne par extension un ensemble hydromécanique d'amplification de puissance par multiplication de la vitesse et/ou du couple.

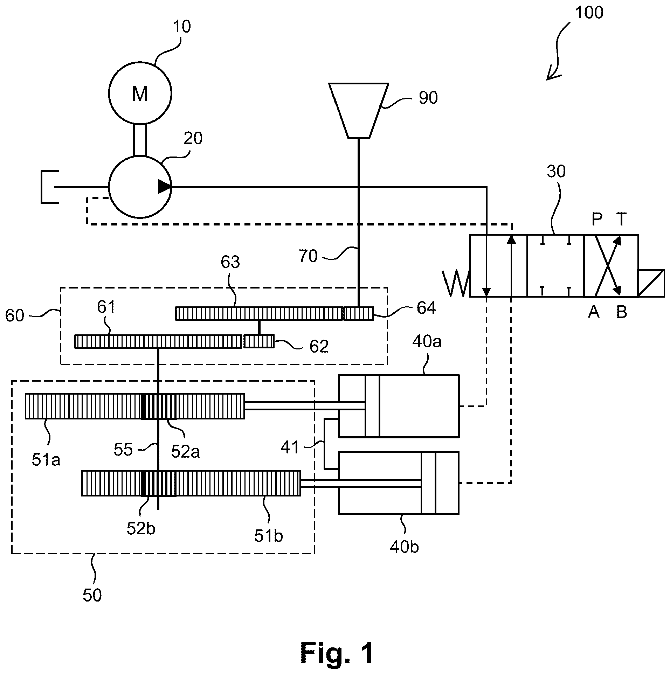

La figure 1 représente un ensemble amplificateur 100 comportant principalement, un moteur 10, fournissant une énergie cinétique en entrée, une pompe 20, actionnée par le moteur et alimentant le reste de l'ensemble, un distributeur 30, un premier vérin 40a, un deuxième vérin 40b, les deux vérins étant communicants et agencés en parallèle, un système pignon crémaillère 50 alterné pour une transmission du mouvement des vérins, un étage de réduction 60 pour une multiplication de la vitesse de rotation en sortie du système pignon crémaillère alterné, un arbre 70 et un alternateur 90 qui constitue la charge de l'ensemble amplificateur 100.

Le moteur 10, selon un exemple de réalisation, est un moteur électrique, de préférence, à courant alternatif tel qu'un moteur asynchrone monophasé. Ce type de moteurs est très répandu en raison de ses puissances de fonctionnement adaptées à des applications domestiques ou à des appareils à consommation limitée.

Le moteur électrique 10 peut être asynchrone triphasé, ou à courant continu en fonction de l'application visée.

Pour des applications de puissance au-delà de quelques kilowatts, le moteur asynchrone est uniquement alimenté par des systèmes de courants triphasés.

Toutefois, ces choix de moteurs ne sont pas obligatoires et le moteur 10 peut être hydraulique, thermique ou de tout autre type à condition de fournir un couple et une vitesse de rotation au moyen d'un arbre pouvant coopérer avec la pompe 20.

Le moteur 10 constitue un actionneur d'entrée de l'ensemble d'amplification 100, qui fournit une puissance utile sous forme de couple et de vitesse de rotation, il peut être fixé à la pompe 20 au moyen d'une bride, avec son rotor couplé à un arbre d'accouplement de ladite pompe.

La pompe 20, selon un exemple de réalisation, est une pompe hydraulique, de préférence, une pompe à engrenages délivrant un débit déterminé.

La pompe hydraulique 20 peut être à cylindrée fixe ou variable, à circuit ouvert ou fermé, avec un ou deux sens de débit, à drainage interne ou externe, avec une autorégulation, etc., et présenter d'autres conceptions mécaniques courantes (palettes, pistons, barillet, etc.).

Alternativement, la pompe 20 peut être une pompe pneumatique ou hydropneumatique en fonction de l'application visée.

La pompe 20 constitue la source d'alimentation en fluide sous pression de l'ensemble amplificateur 100 et fournit une puissance hydraulique sous forme de débit volumique et de pression du fluide.

La pompe 20 est raccordée au distributeur 30 au moyen de canalisations adaptées telles que des flexibles hydrauliques présentant une résistance suffisante aux pressions de fonctionnement atteintes.

Le distributeur 30 permet de commuter et de contrôler la circulation du fluide sous pression provenant de la pompe 20, de sorte à alimenter les vérins 40a et 40b de façon alternée. À cet effet, le distributeur 30, selon un exemple de réalisation de l'invention, comporte quatre orifices et trois positions (communément appelé distributeur 4/3), et présente une commande électrique par solénoïde. Les orifices de l'électrodistributeur 30 comprennent deux orifices de travail A et B, un orifice d'arrivée de pression P et un orifice de retour au réservoir ou de réinjection auxiliaire dans la pompe 20.

Dans le cas d'un fonctionnement de l'ensemble amplificateur 100 avec une pompe pneumatique générant un gaz comprimé, tel que de l'air comprimé, un distributeur de type 4/2 peut préférablement être utilisé.

Ainsi le distributeur 30 commande alternativement le premier vérin 40a et le deuxième vérin 40b de sorte à obtenir un mouvement oscillatoire déphasé entre les pistons desdites vérins.

Chaque vérin, selon un exemple de réalisation de l'invention, est un vérin hydraulique double effet. De préférence, les vérins 40a et 40b sont identiques et présentent des sections de piston sensiblement identiques pour fournir le même effort en sortie et la même vitesse de déplacement de la tige.

Les vérins peuvent également être pneumatiques pour s'adapter à une pompe pneumatique de l'ensemble amplificateur.

De plus, les vérins 40a et 40b communiquent entre eux au moyen d'un raccord 41, de type canalisation rigide ou tuyau flexible, permettant un transvasement du fluide sous pression d'un vérin à l'autre selon la phase du mouvement. En effet, lorsqu'un vérin est en phase sortie de tige, le raccord 41 permet au fluide situé dans le compartiment avant suivant le sens de mouvement de passer dans l'autre vérin, poussant ainsi le piston de ce dernier (phase de rentrée de tige) par le compartiment à l'arrière suivant le sens du mouvement.

Les deux vérins 40a et 40b sont reliés au système pignon crémaillère alterné 50 et permettent d'actionner ledit système.

Le système pignon crémaillère alterné 50, selon l'exemple de réalisation illustré, comporte une première crémaillère 51a, un premier pignon 52a coopérant avec ladite première crémaillère, une deuxième crémaillère 51b, un deuxième pignon 52b coopérant avec ladite deuxième crémaillère, et un arbre de transmission 55 entrainé par chaque pignon dans un seul sens de rotation, l'autre sens s'effectuant en roue libre.

La première crémaillère 51a et la deuxième crémaillère 51b sont solidaires, respectivement, de la tige du premier vérin 40a et de la tige du deuxième vérin 40b. Cette liaison solidaire peut être réalisée par un simple soudage ou par des moyens adaptés rapportés in situ sur les éléments concernés.

Ainsi, les deux crémaillères 51a et 51b reproduisent le mouvement des tiges des deux vérins 40a et 40b, entrainant par conséquent les pignons 52a et 52b.

Le premier pignon 52a et le deuxième pignon 52b engrènent, respectivement, sur la première crémaillère 51a et la deuxième crémaillère 51b, et impriment leur mouvement de rotation à l'arbre de transmission 55 suivant un seul sens de rotation qui correspond aux sorties des tiges des deux vérins 40a et 40b.

En effet, l'arbre de transmission 55 est couplé à chacun des pignons 52a et 52b via un dispositif de roue libre qui peut être conçu selon différents mécanismes connus de l'homme du métier.

Par conséquent, l'arbre de transmission 55 s'anime nécessairement d'un mouvement de rotation toujours dans le même sens, à condition de ne pas inverser le montage des pignons.

L'étage de réduction 60, selon l'exemple de réalisation illustré, est un engrenage constitué, dans le sens de transmission du mouvement, d'une première roue dentée 61, d'une deuxième roue dentée 62, d'une troisième roue dentée 63 et d'une quatrième roue dentée 64, de sorte à multiplier la vitesse de rotation en sortie dudit étage.

La première roue 61 est couplée en rotation à l'arbre de transmission 55 en sortie du système pignon crémaillère alterné 50.

La deuxième roue 62 et la troisième roue 63 sont solidaires et présentent donc la même vitesse de rotation.

La quatrième roue 64 constitue l'organe de sortie cinétique de l'ensemble amplificateur 100 et communique son mouvement directement à l'alternateur 90 via l'arbre 70.

L'étage de réduction 60 peut, dans d'autres modes de réalisation non représentés, être réalisé par d'autres mécanismes parmi des chaines de transmission combinées à des pignons, des trains épicycloïdaux, des systèmes de roues et vis sans fin, des engrenages coniques, une combinaison des mécanismes précités, ou tout autre mécanisme permettant la multiplication de la vitesse de rotation et/ou du couple en sortie.

L'alternateur 90 permet ainsi de récupérer une puissance mécanique amplifiée en amont par l'ensemble amplificateur.

L'ensemble amplificateur 100 peut en outre comporter des éléments de sécurité tels qu'un limiteur de pression au niveau de la pompe.

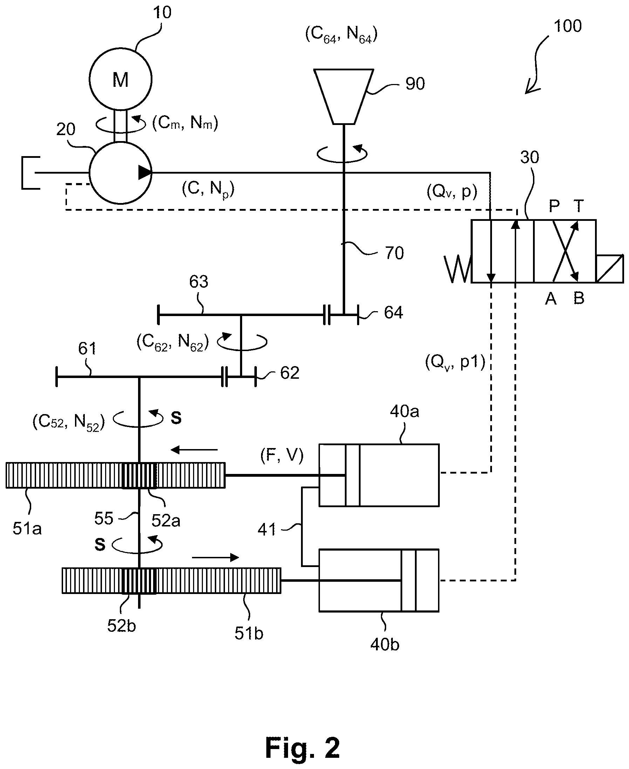

En référence à la figure 2, le moteur électrique 10 délivre un couple Cm et une vitesse de rotation Nm, et donc une puissance utile donnée par la relation :

$$P_m = C_m . N_m$$

Il est à noter que les coefficients de rendements des différents composants sont omis dans les équations, ces équations étant données à titre purement théorique et informatif pour comprendre qu'elles sont les grandeurs physiques en jeu.

La pompe 20 reçoit cette puissance et délivre à son tour une puissance Pp :

$$P_p = Q_v . p$$

avec Qv le débit de la pompe et p la pression du fluide. Le débit est donné par la relation :

$$Q_v = C . N_p$$

avec C la cylindrée de la pompe et Np sa vitesse de rotation.

Le débit restant constant au passage dans le distributeur 30, on récupère une pression $p_1$ plus élevée en raison de la réduction de section de passage du fluide.

Cette pression est ensuite injectée dans les vérins 40a et 40b en fonction de la position du distributeur 30.

En actionnant le piston d'un vérin, cette pression se traduit par un effort donné par l'équation :

$$F = p_1 . S$$

avec S la section du piston.

La vitesse de course de la tige peut être obtenue par le principe de conservation du débit, et la relation entre débit et vitesse :

$$V = \frac{Q_v}{S}$$

On obtient donc une puissance Pv en sortie de chaque vérin égale à :

$$P_v = F.V$$

Enfin, et étant donné que les axes des pignons 52a et 52b, des roues 61 à 64 et l'arbre 70 sont parallèles, une application des équations usuelles des engrenages et de la relation de Willis, donne le rapport de réduction suivant :

$$r = \frac{N_{64}}{N_{52}} = \frac{N_{64}}{N_{62}}\frac{N_{62}}{N_{52}} = \frac{Z_{62}}{Z_{64}}\frac{Z_{52}}{Z_{62}}$$

avec $N_i$ et $Z_i$ respectivement la vitesse de rotation et le nombre de dents de la roue ou du pignon i.

Il ressort de la description de la présente invention que des éléments supplémentaires, usuels pour l'homme du métier, peuvent être ajoutés à l'ensemble hydromécanique et que certains éléments dudit ensemble peuvent être réalisés différemment sans pour autant sortir du cadre de l'invention.

**Revendications**

1.  Ensemble (100) amplificateur de puissance mécanique comportant un moteur (10) en entrée, une pompe (20) actionnée par le moteur, un distributeur (30) alimenté par la pompe, un premier vérin (40a), un deuxième vérin (40b), les vérins étant communicants et raccordés au distributeur, un système pignon crémaillère (50) couplé aux vérins, un étage de réduction (60) couplé audit système, et un alternateur (90) en sortie, le système pignon crémaillère (50) comportant une première crémaillère (51a) solidaire de la tige du premier vérin (40a), une deuxième crémaillère (51b) solidaire de la tige du deuxième vérin (40b), un premier pignon (52a) coopérant avec ladite première crémaillère, un deuxième pignon (52b) coopérant avec ladite deuxième crémaillère, et un arbre de transmission (55) couplé à chacun desdits pignons selon un seul sens de rotation S, l'autre sens de rotation étant en roue libre.

2.  Ensemble selon la revendication 1, dans lequel le premier pignon (52a) et le deuxième pignon (52b) engrènent, respectivement, sur la première crémaillère (51a) et la deuxième crémaillère (51b), et impriment leur mouvement de rotation à l'arbre de transmission (55) suivant le sens de rotation S qui correspond aux sorties des tiges des deux vérins (40a, 40b).

3.  Ensemble selon la revendication 1, dans lequel le moteur (10) est un moteur électrique à courant alternatif, tel qu'un moteur asynchrone monophasé.

4.  Ensemble selon la revendication 1, dans lequel le moteur (10) est un moteur hydraulique.

5.  Ensemble selon l'une quelconque des revendications précédentes, dans lequel la pompe (20) est une pompe hydraulique à engrenage.

6.  Ensemble selon l'une quelconque des revendications précédentes, dans lequel le distributeur (30) comprend quatre orifices et trois positions, ou bien quatre orifices et deux positions, et est commandé électriquement.

7.  Ensemble selon l'une quelconque des revendications précédentes, dans lequel les vérins (40a, 40b) sont des vérins hydrauliques double effet raccordés entre eux au moyen d'un raccord (41) de type flexible ou tuyau rigide.

8.  Ensemble selon l'une quelconque des revendications précédentes, dans lequel l'étage de réduction (60) est un engrenage comprenant quatre roues dentées (61, 62, 63, 64) opérant une multiplication de vitesse de rotation.

**Patentansprüche**

1.  Mechanische Leistungsverstärkeranordnung (100), die einen Motor (10) am Eingang beinhaltet, eine Pumpe (20), die durch den Motor betätigt wird, einen Verteiler (30), der von der Pumpe versorgt wird, einen ersten Zylinder (40a), einen zweiten Zylinder (40b), wobei die Zylinder miteinander kommunizieren und an den Verteiler angeschlossen sind, ein Zahnstangen-Ritzel-System (50), das mit den Zylindern gekoppelt ist, eine Untersetzungsstufe (60), die mit diesem System gekoppelt ist, und einen Wechselstromgenerator (90) am Ausgang, wobei das Zahnstangen-Ritzel-System (50) eine erste Zahnstange (51a) beinhaltet, die fest mit der Stange des ersten Zylinders (40a) verbunden ist, eine zweite Zahnstange (51b), die fest mit der Stange des zweiten Zylinders (40b) verbunden ist, ein erstes Ritzel (52a), das mit der ersten Zahnstange zusammenwirkt, ein zweites Ritzel (52b), das mit der zweiten Zahnstange zusammenwirkt, und eine Antriebswelle (55), die mit jedem der Ritzel in einer einzigen Drehrichtung S gekoppelt ist, wobei die andere Drehrichtung freilaufend ist.

2.  Anordnung nach Anspruch 1, wobei das erste Ritzel (52a) und das zweite Ritzel (52b) jeweils in die erste Zahnstange (51a) und die zweite Zahnstange (51b) eingreifen und ihre Drehbewegung der Antriebswelle (55) in der Drehrichtung S auferlegen, die den Ausgängen der Stangen der beiden Zylinder (40a, 40b) entspricht.

3. Anordnung nach Anspruch 1, wobei der Motor (10) ein Wechselstrom-Elektromotor, wie ein einphasiger Asynchronmotor ist.

4. Anordnung nach Anspruch 1, wobei der Motor (10) ein Hydraulikmotor ist.

5. Anordnung nach einem der vorstehenden Ansprüche, wobei die Pumpe (20) eine Zahnrad-Hydraulikpumpe ist.

6. Anordnung nach einem der vorstehenden Ansprüche, wobei der Verteiler (30) vier Öffnungen und drei Positionen, oder aber vier Öffnungen und zwei Positionen umfasst, und elektrisch gesteuert wird.

7. Anordnung nach einem der vorstehenden Ansprüche, wobei die Zylinder (40a, 40b) doppeltwirkende Hydraulikzylinder sind, die anhand eines Anschlusses (41) in der Art eines Schlauches oder Rohres aneinander angeschlossen sind.

8. Anordnung nach einem der vorstehenden Ansprüche, wobei die Untersetzungsstufe (60) eine Verzahnung ist, die vier Zahnräder (61, 62, 63, 64) umfasst, die eine Multiplikation der Drehgeschwindigkeit vornimmt.

**Claims**

1. A mechanical power amplifier assembly (100) including a motor (10) at the input, a pump (20) actuated by the motor, a distributor (30) powered by the pump, a first cylinder (40a), a second cylinder (40b), the cylinders being communicating and connected to the distributor, a rack-and-pinion system (50) coupled to the cylinders, a reduction stage (60) coupled to said system, and an alternator (90) at the output, the rack-and-pinion system (50) including a first rack (51a) secured to the rod of the first cylinder (40a), a second rack (51b) secured to the rod of the second cylinder (40b), a first pinion (52a) cooperating with said first rack, a second pinion (52b) cooperating with said second rack, and a transmission shaft (55) coupled to each of said pinions according to a single direction of rotation S, the other direction of rotation being freewheeling.

2. The assembly according to claim 1, wherein the first pinion (52a) and the second pinion (52b) mesh, respectively, with the first rack (51a) and the second rack (51b), and impart their rotational movement to the transmission shaft (55) according to the direction of rotation S which corresponds to the outputs of the rods of the two cylinders (40a, 40b).

3. The assembly according to claim 1, wherein the motor (10) is an alternating-current electric motor, such as a single-phase asynchronous motor.

4. The assembly according to claim 1, wherein the motor (10) is a hydraulic motor.

5. The assembly according to any one of the preceding claims, wherein the pump (20) is a hydraulic gear pump.

6. The assembly according to any one of the preceding claims, wherein the distributor (30) comprises four orifices and three positions, or four orifices and two positions, and is electrically controlled.

7. The assembly according to any one of the preceding claims, wherein the cylinders (40a, 40b) are double-acting hydraulic cylinders connected together by means of a connector (41) of the flexible or rigid pipe type.

8. The assembly according to any one of the preceding claims, wherein the reduction stage (60) is a gear comprising four gear wheels (61, 62, 63, 64) performing a rotational speed multiplication.

**Fig. 1**

**Fig. 2**

**EP 3 942 199 B1**

## RÉFÉRENCES CITÉES DANS LA DESCRIPTION

**Documents brevets cités dans la description**

- US 2012025543 A